Europäisches Patentamt

European Patent Office

Office européen des brevets

(11) Publication number: **0 429 081 A2**

## (12) EUROPEAN PATENT APPLICATION

(21) Application number: 90122337.0

(51) Int. Cl.5: **G01K 11/12**

(22) Date of filing: 22.11.90

(30) Priority: 22.11.89 US 440540

(43) Date of publication of application:
29.05.91 Bulletin 91/22

(84) Designated Contracting States:
DE

(71) Applicant: **Research Corporation Technologies, Inc**
**6840 East Broadway Boulevard**
**Tucson Arizona 85710-2815(US)**

(72) Inventor: **Sturm, James C.**
**96 Spring Hill Road**
**Skillman, New Jersey(US)**

Inventor: **Schwartz, Peter V.**
**1102 Lawrence Apt.**
**Princeton, New Jersey(US)**
Inventor: **Garone, Peter M.**
**E1 Lawrence Apt.**
**Princeton, New Jersey(US)**

(74) Representative: **Körber, Wolfhart, Dr.rer.nat. et al**
**Patentanwälte Dipl.-Ing. H. Mitscherlich**
**Dipl.-Ing. K. Gunschmann Dr.rer.nat. W.**
**Körber Dipl.Ing. J. Schmidt-Evers Dipl.-Ing.**
**W. Melzer Dr.R.Schulz Steindorfstrasse 10**
**8000 München 22(DE)**

(54) Silicon wafer temperature measurement by optical transmission monitoring.

(57) A method for the measuring of semiconductor materials at elevated temperatures. The method comprises generating a first beam of electromagnetic energy with a preselected wavelength, directing the beam onto a semiconductor material having a known thickness, measuring the intensity of the first beam after transmittance through the semiconductor material to generate a first signal which is representative of the intensity of the transmitted beam, and calculating the temperature of the semiconductor material as a function of the first signal and the thickness of the material. The method makes use of a temperature measuring apparatus which basically comprises a means for generating the first beam of electromagnetic energy, a photon detection means for measuring the intensity of the beam and a display means for indicating the temperature of the semiconductor wafer.

FIG. 2

## SILICON WAFER TEMPERATURE MEASUREMENT BY OPTICAL TRANSMISSION MONITORING

The present invention generally relates to a method for accurately measuring the internal temperature of semiconductor materials, and more particularly, to a method and apparatus for accurately measuring the internal temperature of semiconductor wafers undergoing various forms of rapid thermal processing utilizing nonintrusive optical techniques.

The field of semiconductor fabrication is an important and increasingly complex technology which is absolutely vital tot he continued advancement of solid state electronic device technology. The more common semiconductor materials include silicon, germanium, gallium arsenide, and among these, the material most frequently used in semiconductor devices in silicon. The wide range of semiconductors and the various electrical properties associated with each of the semiconductor materials provide circuit designers with much flexibility in designing devices with varying electrical properties. This need to create semiconductor devices utilizing various semiconductor materials in one package has become one of the principle problems involved in semiconductor fabrication.

Today, the trend toward smaller semiconductor device geometries has created an interest in the short time, high temperature processing of silicon, examples of these techniques include rapid thermal annealing (RTA), and rapid thermal processing (RTP) of ion implanted layers. These techniques involve using radiant heating to couple heat energy into the silicon. In order to take advantage of these techniques, it is necessary to measure and control the wafer temperature versus time profile very accurately. Today most commercial RTP systems use either thermocouples attached to the wafer or pyrometers which are calibrated against thermocouples to monitor the semiconductor processing temperature.

The most straightforward way to measure sample temperature in semiconductor processing is with a thermocouple. This method works well when the wafer is surrounded by an environment at the same temperature of the wafer, so that the thermocouple is of the same temperature as the semiconductor wafer sample. A second well known technique is optical or infrared pyrometry. This technique looks at the optical energy emitted by the wafer in a certain wavelength region. This energy is characteristic of the temperature. This method requires knowledge of the wafer emissivity of the given radiation wavelength and also requires that all windows between the sample and the pyrometer be transparent at the wavelengths of interest.

In rapid thermal processing the environment surrounding the wafer is at many different temperatures, and thus, if a thermocouple is to be used to measure the temperature of the wafer, there must be good thermal contact between the thermocouple and the wafer. A persistent problem associated with the use of thermocouples is the method used to bond the thermocouples to the wafers. Poor thermal contact and slow response times can limit accurate measurement of the wafer transient and in some cases steady-state temperature. Conventionally, holes are drilled into the wafer for insertion of the thermocouple, the thermocouple is then sealed in the hole with a ceramic cement. This process can introduce impurities into the environment which can adversely affect both the temperature sensor and the devices fabricated in the wafer. Further, the desired thermal contact is not easily reproduced using cement holes and the integrity of the thermocouple can be jeopardized.

United States Patent No. 4,787,551 to Hoyt et al. discloses a method of welding thermocouples to silicon wafers for temperature monitoring in RTP thereby avoiding the aforementioned problems. However, the disclosed method requires that the thermocouple be welded using TIG welding and/or electron-beam welding which is a multistep process that requires time and skill to successfully complete. In addition, there is a risk of damage to each wafer that a thermocouple is welded to.

Optical pyrometers have been used in engineering and science applications for a relatively long period ot time, and their operatioñ and use are well known in the above mentioned fields. Optical pyrometry offers the major advantage of measuring the temperature of a body without having to physically touch the body; however, the pyrometry method also has certain definite disadvantages associated with its use which make it impractical to use. Optical pyrometry can give different results depending on what emissivity is used, and extreme care must be taken to avoid measuring radiation from the heat lamps used in the RTP or RTA apparatus. Optical pyrometry becomes even more difficult at low temperatures, of $600^{\circ}$ C to $700^{\circ}$ C, since measurement of longer wavelengths of radiation, longer than three microns, are required and the longer wavelengths are severely attenuated by the windows used to measure the emitted radiation. This presents a severe problem when a quartz walled chamber is used to contain a reactive gas species, as in epitaxial growth applications, as disclosed as an example in U.S. Patent No. 4,544,418 to Gibbons, because quartz is fairly opaque to wavelengths greater than 3 microns. In addition, field oxides and polysilicon layers among other things will effect the emissivity and transmission of a wafer because of thin film interference effects. These effects can easily affect optical pyrometer measurements by up to $50^{\circ}$ C.

The present invention provides for a method of non-invasively measuring the temperature of a semiconductor material at elevated temperatures in the range of 400°C to 800°C. It is particularly useful in processes which involve the rapid thermal processing or annealing of a semiconductor. The method includes the steps of generating a monochromatic beam of electromagnetic energy with a predetermined wavelength; focusing the beam onto the surface of a semiconductor material; measuring the intensity of the beam, after transmittance of the beam through the material, to generate an electrical signal, wherein the signal is representative of the intensity of the transmitted beam; and calculating the temperature of the semiconductor as a function of the electrical signal, and the thickness of the semiconductive material.

This method of temperature measurement, by optical transmission monitoring, provides a non-invasive optical technique for the accurate and rapid measurement of the absolute temperature of silicon wafers. The method provides for routine temperature monitoring of the silicon wafer in the temperature range of 400°C to 800°C, with resolution on the order of one degree centigrade.

Since the method does not depend on the temperature of anything but the water, it is particularly well suited to non-thermal equilibrium environments such as those encountered in rapid thermal processing (RTP) or rapid thermal annealing (RTA) systems where the wafer is usually heated by radiation from heat lamps. The method is also particularly well suited for RTP systems because RTP systems often require the silicon wafer to be enclosed in quartz container. Since quartz is transparent at the wavelengths that have been found to be useful in the present invention, the optical monitoring can now be done from outside the quartz container walls. In addition, the present invention provides a method for compensating for the pattern coatings that usually form on the surface of the silicon such as silicon dioxide or polysilicon.

The present invention has a wide variety applications where a high degree of accuracy is absolutely necessary. The method provided by the present invention can operate RTP or RTA systems with constant temperature monitoring and with closed loop temperature control with feedback. The method could also be applied to any other environment, but would be most useful where thermocouples could not be used because of corrosive gases or because of a lack of a uniform temperature surrounding the semiconductor. The present invention is applicable to almost all semiconductors, such as gallium arsenide, germanium, indium phosphide among others. The wavelengths that are useful in the practice of the present invention are different for different semiconductors since each has different absorptive properties.

The invention also includes a highly accurate temperature measuring device for measuring elevated temperatures in the range of 400°C to 800°C with an accuracy of one degree centegrade. The temperature measuring device uses a thin silicon wafer positioned between a beam of monochromatic electromagnetic energy and a photon detection means. The photon detection means measures the intensity of the transmitted beam. A display means indicates the temperature of the silicon wafer, as a function of the thickness of the wafer and the intensity of the transmitted beam.

Figure 1 is a graphic representation of normalized transmission values versus temperature for silicon wafers having a thickness of 450 μm;

Figure 2 is a diagrammatic block diagram of the apparatus for the wafer temperature measurement by optical transmission monitoring utilizing a single wavelength light source;

Figure 3 is a diagrammatic block diagram of the apparatus for the wafer temperature measurement by optical transmission monitoring utilizing multiple wavelength light sources; and

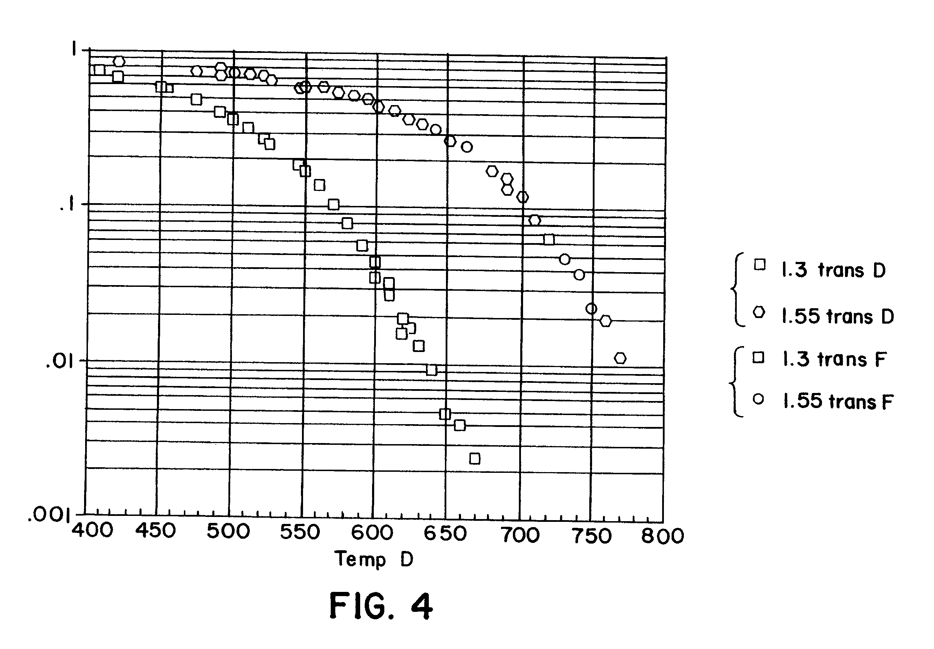

Figure 4 is a graphic representation of normalized transmission values versus temperature before and after application of silicon-germanium epitaxial layers.

## GENERAL THEORY

The method of silicon wafer temperature measurement by optical transmission monitoring is based upon observing the transmission of light at a certain wavelength through the silicon wafer. While a silicon wafer is opaque to visible light, it is transparent to certain infrared wavelengths. When photons of selected wavelengths are directed to the silicon wafer, photons with energies greater than the band gap energy, Eg, are mostly absorbed while photons with energies less than Eg are mostly transmitted. Photons with energy greater than Eg are mostly absorbed by the semiconductor because the energy of the photons excites the electrons located in the valence band of the semiconductor, and these excited electrons "jump" into the empty states of the conduction band of the semiconductor. The photons with less energy mostly pass through or are transmitted because the energy they contain cannot excite the electrons. In silicon, the change in absorption as the photon energy changes through Eg is not very sharp, however, because photons are also often required for this absorption process. A phonon is a lattice vibration. In general, the larger the photon energy with respect to Eg is, the larger the absorption is. This is one of the two physical mechanisms by which radiant energy is absorbed, the second mechanism is absorption by free carriers. In all semiconductor materials there are a certain number of free carriers, and these free carriers are able to absorb energy without "jumping" from one band into another. As the temperature of the semiconductor increases, the number of free carriers increases, thus there is increased absorption at higher temperatures.

Silicon as well as most of the other semiconductors have an Eg that is directly dependent upon temperature. As the temperature of the silicon wafer is increased, the band gap energy decreases and the number of free carriers increases, and when the temperature of the silicon is decreased the band gap energy increases and the number of free carriers decreases. Therefore, as the temperature of the silicon wafer increases, less and less photons are transmitted through the wafer because Eg has decreased which means the photon energy is larger with respect to Eg, and also means more free are carriers available, both of which increase absorption. Conversely, if the temperature of the silicon wafer decreases, more and more photons are transmitted through the wafer because Eg has increased which means the photon energy is smaller with respect to Eg transmitted, and also means there are fewer free carriers available, both of which tends to decrease absorption.

Mathematically, the optical transmission, I, of a silicon wafer is given by

$$I = i_1 - i_2 e^{-\alpha(T)d} \qquad (1)$$

where $i_1$ is the transmission of the top silicon surface, $i_2$ is the transmission of the bottom silicon surface, $\alpha(T)$ is the absorption coefficient of the semiconductor at temperature T at the particular wavelength of radiation used, and d is the wafer thickness. It is important to note that multiple reflections through the wafer and interference effects are ignored in the practice of the present invention because of the scattering caused by the rough surface and beam divergence. Basically, $i_1$ and $i_2$ have little dependence upon the temperature of the wafer compared to the $e^{-\alpha T(d)}$ term, therefore, the transmittance will be approximately equal to $e^{-\alpha(T)d}$. The absorption coefficient $\alpha(T)$ is a function of temperature, such as the temperature increases, $\alpha(T)$ increases and as the temperature decreases, $\alpha(T)$ decreases. In addition, as the thickness of the wafer, d, increases, the transmission decreases and as the thickness decreases the transmission increases. Therefore, if one knows the thickness of a wafer, which is easily measured, one can directly relate the optical transmission I to the temperature of the silicon wafer.

The detected signal depends upon the incident light power, optical alignment and other systematic factors. To remove the dependence of the measurements on these factors a normalized transmission ratio or value is used. The normalized transmission I(T,d) is defined as the ratio of the light transmitted at temperature T to the light transmitted a room temperature $T_0$, or for any fixed temperature where the temperature is repeatable. The normalized transmission I (T,d) will also not depend upon surface reflectivity which may be effected by surface layers such as field oxides or polysilocon layers. Therefore, the normalized transmission is given by

$$I(T,d) = \frac{e^{-\alpha(T)d}}{e^{-\alpha(T_0)d}} = \underline{\text{transmitted signal at temperature } T} \qquad (2)$$
$$\text{transmitted signal at temperature } T_0$$

or

$$I(T,d) = e^{[\alpha(T_0) - \alpha(T)]d} \quad . \qquad (3)$$

Constant factors such as laser or light power do not enter into the expression for I given in equation (3).

DEVELOPMENT

Because of the scarcity of good data on the optical properties of semiconductors at elevated temperatures, the method which shall be explained subsequently, is first calibrated against a known method such as measuring transmission versus temperature in a furnace environment where a thermocouple can be used to define a known temperature, and thus develop a curve of normalized transmission versus temperature. Once the transmission versus temperature curve is derived for a specific semiconductor, the system can be used in other operating environments wherein the temperature is to be measured in the $400°C$ to $800°C$ range if silicon is the semiconductor material to be measured. The transmission does depend upon sample thickness d, thus if samples are of different thickness one must either use a calibration curve for that thickness, or else correct for the different thickness using the well known $e^{-\alpha(T)d}$ relationship. Utilizing the result known in equation (3), the relationship between the normalized transmission I(T),d) for two thicknesses $d_1$ and $d_2$ is given by

$$I(T,d_2) = [I(T,d_1)]^{d_2/d_1} \qquad (4)$$

Thus, if only one calibrated curve is done for a given wavelength and thickness, one can, by utilizing equation (4), calculate I for a different thickness is of wafers utilizing the same wavelength radiation.

As an example, if a wafer which has a thickness of 200 microns has a normalized transmission equal to 0.8 at a certain temperature and wavelength, a wafer of the same material that is 400 microns thick would have a normalized transmission at the same temperature and wavelength given by

$$I(T,d_2) = [0.8]^{400/200} , \qquad (5)$$

or

$$I(T,d_2) = 0.64 . \qquad (6)$$

As was stated previously, this derivation depends on the fact that the reflection at the wafer surface does not change very much as the temperature changes. With silicon, from room temperature to 700°C, one would expect only a 2 percent change in reflection in the 1.3 to 1.5 $\mu$m wavelength range, making it a good approximation to assume that the reflectance does not change with temperature.

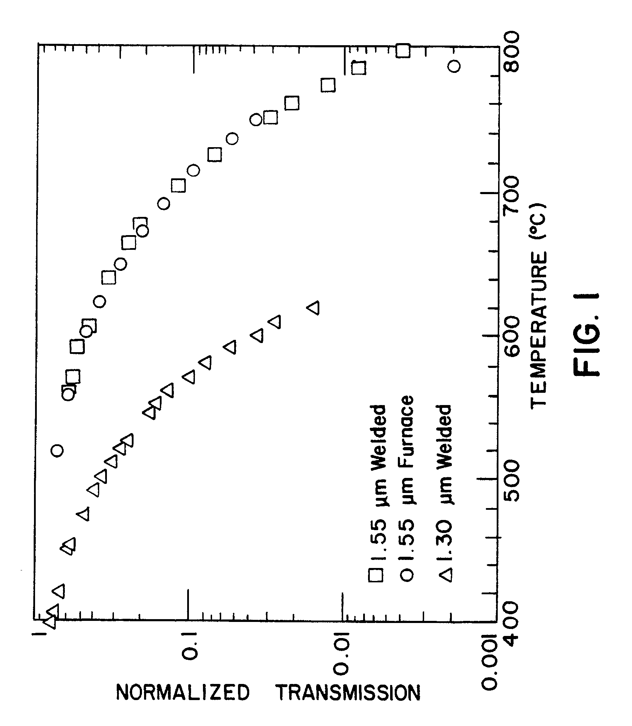

The calibration of the method has been done for a silicon wafer of 450 $\mu$m at two different wavelengths of radiation; namely, at 1.55$\mu$m and 1.30 $\mu$m. The calibration was done utilizing a thermocouple welded to the wafer, as described in U.S. Patent No. 4,787,551, in a rapid thermal processing reactor. The results are shown in Figure 1, which may be used to determine the temperature of the wafer when the normalized transmittance is known. Also shown in Figure 1 is the normalized transmission of a wafer of similar thickness measured in a conventional furnace environment where the wafer temperature was measured by a thermocouple inserted into the furnace tube. As is seen in Figure 1, there is excellent agreement between the measurements. In the following description of the method of the invention, a complete description of how the transmittance values are normalized is given.

Figure 1 illustrates the transmittance values of a known silicon wafer. The values have been normalized to cold transmittance values. A welded thermocouple in the wafer was used for calibration. The source frequencies had wave lengths of 1.55 $\mu$m and 1.3 $\mu$m. The higher energy photons at 1.3 $\mu$m have higher absorption than those at 1.5 $\mu$m at a given temperature. The greatest accuracy for temperature measurement will occur when the relative transmission is a strong function of temperature. For example, near 750°C, a 4 percent change in transmission of the 1.55 $\mu$m laser corresponds to only a temperature change of approximately 1°C. However, near 600°C, to get 1°C accuracy, a less than 1 percent change in the 1.55 $\mu$m signal would have to be detected. While this is easily done with fairly simple electronics, there is a fundamental advantage of using the transmission at 1.3 $\mu$m at lower temperatures. At 600°C, a 5 percent change in the transmitted signal corresponds to about 1°C, five times more accurate than the 1.55 $\mu$m signal of that temperture. This illustrates that for accuracy, the highest photon energy where a detectable transmitted signal is still received should be selected. Further, below 500°C, the change in the 1.55 $\mu$m transmittance with temperature is fairly small, making this wavelength not a useful measure of temperature below that threshold. However, the transmittance at 1.3 $\mu$m is a strong function of temperature down to at least 400°C. From a practical point of view, it is found that the 1.3 $\mu$m and 1.55 $\mu$m combination very useful for work anywhere between 400°C to 800°C, with a daily absolute accuracy within a few degrees. The only adjustable parameter is the wafer thickness, which of course is very easily measured.

OPERATION

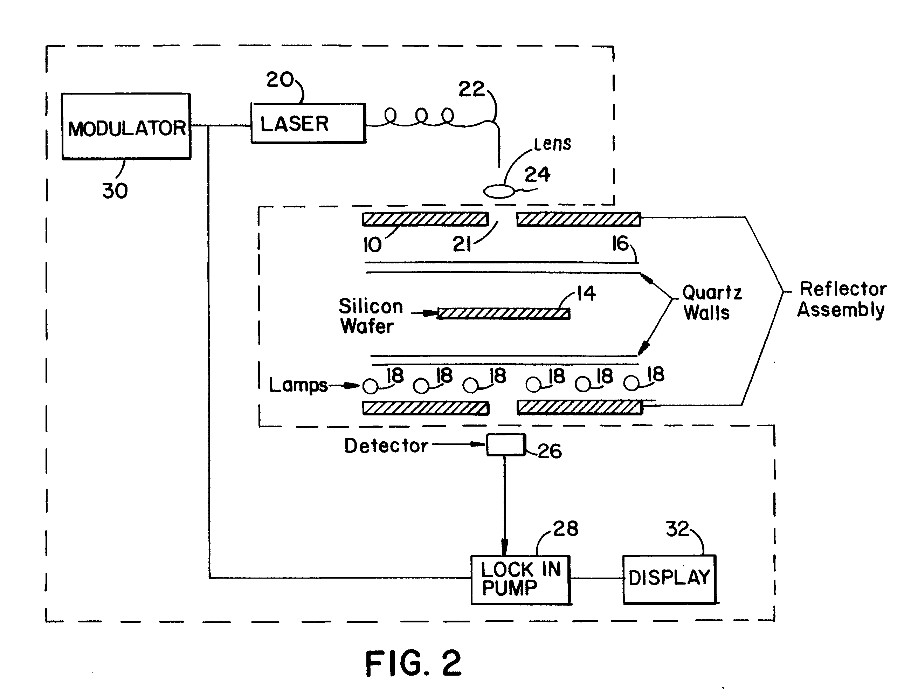

Figure 2 illustrates the application of the present invention to a basic RTP system. As illustrated, a lamp-heated rapid thermal processing system is provided with quartz walls for gas containment as used in the description process disclosed in U.S. Patent No. 4,544,418. This configuration is also known as a limited reaction processing system. The apparatus indicated within the dotted lines is a means for performing the temperature measurement process while the remaining elements are part of a conventional rapid thermal processing system. As was stated previously, the transmission values shown in Figure 1 are normalized transmission values. In order to remove the effect of ambient light and electrical noise, a room temperature or cold wafer temperature measurement should be done first so the hot temperature measurements can be normalized.

The rapid thermal processing system consists of first and second water cooled reflectors 10 and 12 which provide for the even heating of the silicon wafer 14 which is enclosed in a quartz tube 16. The heat energy for the process is supplied by a series of heating lamps 18. For purposes of this illustration, it is assumed that the wafer will be heated to a specific temperature, which is exactly monitored and controlled. The optical temperature detecting means of the present invention is used to monitor the temperature of the wafer 14 and to control the temperature of the wafer by adjusting the output of the heating lamps 18.

The process begins by directing light energy from a semiconductor laser 20 onto the silicon wafer 14 through an opening 21 in water cooled reflector 10. In the embodiment used to generate the values represented in Figure 1, the electromagnetic energy supplied is at a wavelength of either 1.55 $\mu$m or 1.30 $\mu$m and can be supplied from other sources than a laser such as a light emitting diode, LED, or a white light source; however, it is important that whatever light source is utilized, the beam must be monochromatic, typically having a 0.01 $\mu$m bandwidth. Whichever radiation source is utilized, some form of modulation should be used for ease of detection of the transmittance signal. The typical range of modulation of the radiation is between 100 Hz and 100 KHz. In addition, if a white light source is utilized, it must be filtered with a monochromatic, diffraction grating or the like to be within a specific bandwidth. The light energy from the semiconductor laser 20 is directed through a fiber optic element 22 onto a lens 24. The fiber optic element 22 is not necessary if the laser 20 can be lined up directly with the wafer 14. The fiber optic element 22 is only utilized for convenience of mounting the light source. The lens 24 is used to focus the light energy directly onto the wafer 14. Once again the lens 24 is not absolutely necessary, but insures that the maximum amount of radiation impinges upon the wafer 14.

Depending upon the temperature of the wafer 14, a certain amount of light energy will be transmitted through the wafer. The thickness of the wafer is already known and thus is not a variable in the process. Whatever light energy is transmitted through the wafer 14, it is collected by an optical detector 26. The optical detector 26 converts the transmitted light energy into an electric signal, which is normally measured in volts. The voltage signal is proportional to the transmitted light and is fed into a lock-in amplifier 28. After amplification of the incoming signal, the lock-in amplifier 28 is used to discriminate the signal of interest from the stray signals that arise from any other ambient optical interference, such as light from the heat lamps 18, impinging upon the detector 26. When the rapid thermal process is first started, the output of the lock-in amplifier 28 is a first signal representative of transmission I(T,d) when T is equal to $T_0$, or the room temperature. The output of the lock-in amplifier 28 when the process is running is the first signal, representative of the transmission I(T,d) when T is equal to whatever temperture the wafer 14 has been elevated to. Thus, the values at room temperature and at operating temperature are substituted into equation (2) and the normalized value is read from the vertical scale of Figure 1 and the operating temperature is determined. If the thickness of the wafer is different from the one in Figure 1, equation (4) may be used to compensate for the difference in transmission. The signal output from the lock-in amplifier 28 is fed to an output display 32.

The output display 32 can be a computer which is programmed to automatically implement equations (3) and (4) or a display unit that displays the value of the first signal on a calibrated scale to represent the operating temperature. With a simple voltmeter type of device a separate calibrated scale would be necessary for each thickness and each type of semiconductor. Once the temperature is known, the heat lamps can be manually adjusted or automatically adjusted through an automatic control system utilizing the present invention in the feedback loop.

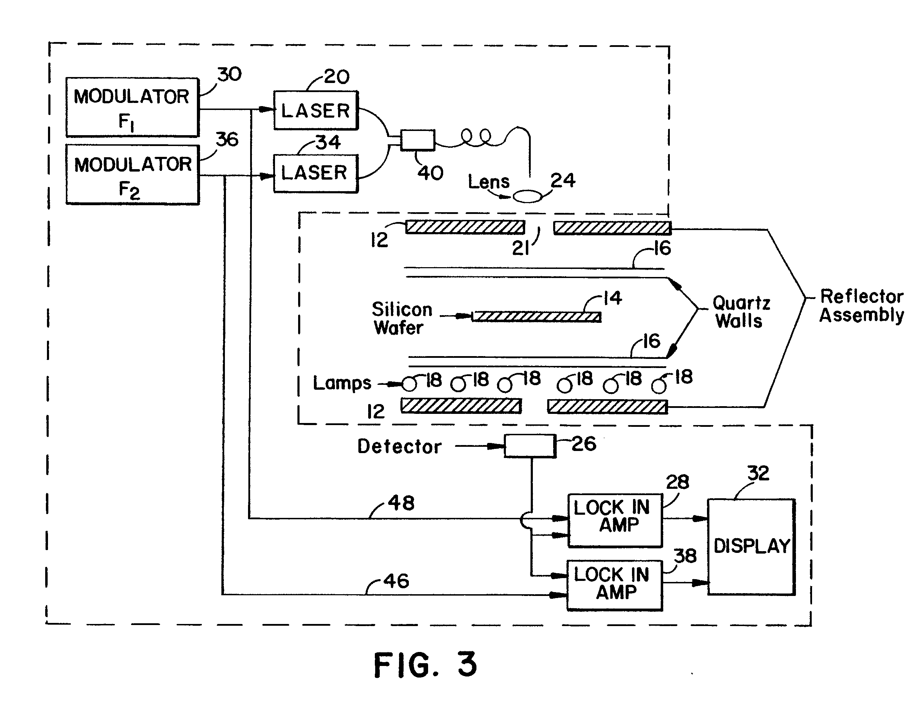

Figure 3, illustrates the present invention with a two laser system. As was stated before, the process or method is more efficient when two different wavelengths of light are used. As indicated in the figure, two lasers 20 and 34 are used, with two modulators 30 and 36 producing two separate and distinct driver frequencies, $f_1$ and $f_2$. Two lock-in amplifiers 28 and 38 are also used to separate out the values of $f_1$ and $f_2$ after transmittance. While multiple frequencies are advantageous for sensitivity, it is also desirable from a practical point of view, to minimize the optical hardware required, including the number of beam paths. Thus, an optical coupler 40 is used which provides for the use of multiple lasers on a common beam path. A single detector 26 is used to detect the combined signal, and a pair of lock-in amplifiers 28, 38 are used to separate the various transmitted signals. The laser sources 20 and 34 are modulated at different frequencies $f_1$, $f_2$ and combined onto a common fiber 22 by means of the coupler 40. This one fiber 22 is used to project the optical signals through the wafer, and a single detector 26 is used to generate a combined or superimposed first and second signal. The first and second signals representative of the transmittance values at the two different wavelengths can be separated by using lock-in amplifiers 28 and 38, which are synchronized to the desired modulation frequency by reference signals on control loops 46 and 48.

Field oxides, polysilicon layers, etc, will effect the emissivity and transmission of a wafer because of thin film interference effects. These effects can easily effect optical pyrometer measurements by 50°C. While such layers will also effect optical transmission, they are not a function of temperature. Therefore, the effect of these layers may be automatically taken care of by normalizing the operating temperature signal to the room temperature signal.

Recently there has been a large interest in silicon-germanium epitaxial layers on silicon for devices such as heterojunction bipolar transistors (HBT). These layers have smaller bandgaps than that of silicon, and might be thought to strongly affect the transmission, making temperature measurement based on optical transmission using silicon substrate parameters impossible. However, relevant thicknesses and germanium concentrations for a HBT will probably involve roughly 20 percent germanium in 50 mm layers. In order to determine the effect of such a layer on the accuracy of the present invention, a silicon-germanium epitaxial layer was grown on a silicon wafer, and the temperature of the wafer was tested with both the present invention and with a welded thermocouple.

Figure 5 illustrates the transmission at 1.3 and 1.55 $\mu$m both before and after the silicon-germanium growth. The squares with the dots in the center represent the 1.55 $\mu$m wavelength transmission with a welded thermocouple in a RTP process, the black diamonds represent a 1.55 $\mu$m wavelength transmission with a furnace calibration, and the solid black squares represent a 1.3 $\mu$m wavelength transmission with a welded thermocouple in a RTP process. As can be seen from Figure 5, the transmission values before and after are virtually identical, and are within the accuracy of the current apparatus. Thus for technologically relevant layers of interest, the present invention may be used with silicon-germanium layers without having to modify the apparatus or the method in anyway.

## Claims

1. A method of measuring the temperature of semiconductive materials at elevated temperatures, said method comprising;
   (a) generating a first beam of electromagnetic energy with a preselected wavelength;
   (b) directing the beam onto a semiconductive material having a known thickness;
   (c) measuring the intensity of said first beam after transmittance through said semiconductive material to generate a first signal, said signal being representative of the intensity of said transmitted beam;
   (d) calculating the temperature of the semiconductive material as a function of said signal and said known thickness.

2. The method of measuring the temperature of a semiconductor material according to Claim 2 which further includes the step of normalizing said first signal at a repeatable temperature such as room temperature or at a fixed temperature before elevation of said temperature.

3. A method of measuring the temperature of a semiconductor material as claimed in Claim 1 wherein said predetermined wavelength is from 1.1 to 1.9 $\mu$m for a silicon semiconductor.

4. A method of measuring the temperature of a semiconductor material as claimed in Claim 1 which further comprises the steps of:
   (a) generating a second beam of electromagnetic energy with a second predetermined wavelength;
   (b) combining the first and second beams into a single beam;
   (c) measuring the intensity of the combined beams and deriving the first signal and a second signal with first and second lock in amplifiers.

5. A method of measuring the temperature of a semiconductor material as claimed in Claim 4 wherein the predetermined wavelength of said first beam is 1.3 $\mu$m and the predetermined wavelength of the second beam is 1.55 $\mu$m, said first beam is used to calculate temperatures between 400°C and 650°C and said second beam is used to calculate temperatures between 650°C and 800°C.

6. A method of measuring the temperature of a semiconductor material as claimed in Claim 4, which further includes the step of synchronizing the first and second lock-in amplifiers with a pair of modulators used to drive the lasers which generate said first and said second beams, respectively.

7. A temperature measurement apparatus, said apparatus comprising:
   (a) first means for generating a monochromatic beam of electromagnetic energy with a predetermined wavelength;

(b) a semiconductive wafer positioned across said beam for impingement of said beam thereon, said wafer having a known thickness;

(c) photon detection means adjacent said wafer opposite said beam for measuring the intensity of said beam after transmittance through said wafer;

(d) display means for indicating the temperature of the semiconductive wafer, said means responsive to the intensity of the transmitted beam and the thickness of the wafer.

8. The temperature measuring apparatus according to Claim 7 wherein said means for generating said monochromatic beam of electromagnetic energy is a laser or a light emitting diode.

9. The temperature measuring apparatus according to Claim 7 wherein said semiconductor wafer is a silicon wafer, a germanium wafer, a gallium arsenide wafer, or an indium antimonide wafer.

10. The temperature measuring apparatus according to Claim 7 wherein said photon detection means comprises:

(a) a photo detector which converts said beam after transmittance through said wafer into a voltage signal, said voltage signal being directly related to the transmittance of the semiconductor wafer and;

(b) an amplifying means for amplifying said voltage signal and discriminating said signal from interference signals impinging upon said photo detector.

11. The temperature measuring apparatus according to Claim 10 wherein said display means receives said voltage signal and displays said signal on a CRT monitor.

12. The temperature measuring apparatus according to Claim 11 wherein said display means further calculates the temperature of said semiconductor wafer as a function of said voltage signal and said wafer thickness.

13. The temperature measuring apparatus according to Claim 7 further includes a second means for generating a second monochromatic beam of electromagnetic energy with a second predetermined wavelength.

14. The temperature measuring apparatus according to Claim 13 wherein said photon detection means comprises:

(a) a photo detector which converts said beam after transmittance through said wafer into a voltage signal, said voltage signal being directly related to the transmittance of the semiconductor wafer;

(b) a first amplifying means for amplifying said voltage signal and discriminating a first frequency signal from said voltage signal; and

(c) a second amplifying means for amplifying said voltage signal and discriminating a second frequency signal from said voltage signal.

15. The temperature measuring apparatus according to Claim 12 wherein said display means receives said first and second frequency signals and displays a function of said signals on a CRT monitor.

16. The temperature measuring apparatus according to Claim 15 wherein said display means further calculates the temperature of said semiconductor wafer as a function of said first or second frequency signals and said wafer thickness.

FIG. I

FIG. 2

EP 0 429 081 A2

FIG. 3

EP 0 429 081 A2

Temp D

FIG. 4

Legend:
- □ 1.3 trans D
- ○ 1.55 trans D
- □ 1.3 trans F
- ○ 1.55 trans F

EP 0 429 081 A2